# FASCICULE DE BREVET EUROPEEN

(11) **EP 4 069 527 B1**
(45) Date de publication et mention de la délivrance du brevet: **07.02.2024**
(21) Numéro de dépôt: 20828048.7
(22) Date de dépôt: 03.12.2020
(51) Int. Cl.: B60C 11/00

(54) **PNEUMATIQUE À BANDE DE ROULEMENT PERFECTIONNÉE**
LUFTREIFEN MIT VERBESSERTER LAUFFLÄCHE
PNEUMATIC TIRE WITH IMPROVED TREAD

(30) Priorité: 04.12.2019 FR 1913722
(43) Date de publication de la demande: 12.10.2022
(73) Titulaire: COMPAGNIE GENERALE DES ETABLISSEMENTS MICHELIN, 63000 Clermont-Ferrand (FR)
(72) Inventeur: DURAND-GASSELIN, Benoit, 63040 CLERMONT-FERRAND Cedex 9 (FR); HELLOT, Fabien, 63040 CLERMONT-FERRAND Cedex 9 (FR); FRANCOIS, Marie-Laure, 63040 CLERMONT-FERRAND Cedex 9 (FR)
(74) Mandataire: M.F.P. Michelin
(86) Numéro de dépôt international: PCT/FR2020/052270
(87) Numéro de publication internationale: WO 2021/111083

(56) Documents cités:
- EP-A1- 3 208 110
- WO-A1-2015/032601
- WO-A1-2018/002487
- WO-A1-2019/145621

## Description

La présente invention concerne un pneumatique pour un véhicule de tourisme, et plus particulièrement la bande de roulement d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Le plan équateur est le plan circonférentiel, perpendiculaire à l'axe de rotation, passant par le milieu de la bande de roulement.

Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

Un pneumatique comprend un sommet comprenant une bande de roulement destinée à venir en contact avec le sol par l'intermédiaire d'une surface de roulement, au moins une armature de sommet radialement intérieure à la bande de roulement. Le pneumatique comprend également deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande de roulement, est constituée donc par le ou les mélanges caoutchouteux radialement extérieur à la couche d'éléments de renforcement la plus radialement extérieure de l'armature de sommet, en excluant les mélanges caoutchouteux enrobant les éléments de renforcement de ladite couche de sommet.

La bande de roulement ne comprend pas les mélanges caoutchouteux disposés sur chaque flanc du pneumatique dont une portion pourrait être radialement extérieure et axialement extérieure à l'armature de sommet. Les mélanges flancs qui ont des compositions tout à fait particulières notamment pour résister aux ultra-violets sont exclus des surfaces et des volumes de la bande de roulement. Un mélange caoutchouteux du pneumatique dont plus de 30% de la surface sur une coupe méridienne est radialement intérieure à la couche de sommet la plus radialement intérieure n'est pas un mélange de la bande de roulement mais un mélange flanc.

L'expression « mélange caoutchouteux » désigne une composition de caoutchouc comportant au moins un élastomère et une charge.

La bande de roulement des pneumatiques considérés par l'invention comprend des découpures qui correspondent à l'espace délimité par des parois de matière se faisant face et distantes l'une de l'autre d'une distance non nulle et reliées par une surface de fond. La hauteur sculpture est la distance radiale maximale entre les points les plus radialement intérieurs des surfaces de fond et la surface de roulement. Ces découpures sont essentielles pour la performance en adhérence sur sol mouillé et notamment d'hydroplanage. Les surpressions sur le sol que les découpures engendrent à l'interface entre la surface de roulement et lesdites parois, permettent de rompre le film d'eau présent sur le sol de roulage afin de mettre en contact le dit sol et le mélange caoutchouteux de la bande de roulement. Les découpures constituent également un volume de creux qui permet de stocker l'eau présente sur le sol et déplacée par la mise en contact de la surface de roulement sur le sol de roulage. Cette capacité de stockage est primordiale dans la performance d'hydroplanage.

Les performances des pneumatiques évoluent avec leur usure. Au fur et à mesure de la diminution avec l'usure de la hauteur sculpture, les performances du pneumatique évoluent, la résistance au roulement baisse car l'épaisseur de mélanges caoutchouteux déformée est diminuée, la rigidité de la sculpture augmente et la capacité de stockage d'eau diminue et en conséquence la performance d'hydroplanage diminue.

Pour améliorer plus encore la performance en adhérence sur sol mouillée et notamment d'hydroplanage pour un pneumatique usé, une solution est d'utiliser un mélange caoutchouteux de haute hystérèse à 0°C pour la bande de roulement à l'état neuf. Cette solution en revanche dégrade fortement la résistance au roulement car le mélange caoutchouteux ayant de telles propriétés à 0°C, a également une hystérèse à 23°C élevée, caractéristique qui pilote prioritairement la résistance au roulement.

Cet objectif est atteint dans l'état de la technique en utilisant des sculptures complexes qui recréent des découpures au fur et à mesure de l'usure du pneumatique (EP 2311655 A1, JPS61 160303). Ces solutions nécessitent la fabrication de moules de pneumatiques complexes, onéreux, compliqués à démouler et sensibles à l'arrachement de gommes.

D'autres pneumatiques sont décrits dans EP3208110, WO2015/032601, WO2018/002487 et WO2019/145621.

L'objectif de l'invention est d'assurer une très bonne adhérence sur sol mouillée en fin de vie d'un pneumatique sans détériorer la résistance au roulement.

Cet objectif est atteint par un pneumatique pour véhicule de tourisme comprenant :
- une bande de roulement destinée à entrer en contact avec un sol par l'intermédiaire d'une surface de roulement, deux bourrelets destinés à venir en contact avec une jante et deux flancs reliant le sommet aux bourrelets,
- la bande de roulement étant radialement extérieure à une armature de sommet, ladite armature de sommet comprenant au moins une couche de sommet comprenant des éléments de renforcement,
- la bande de roulement ayant une partie centrale et deux parties axialement extérieures, la partie centrale étant d'une largeur axiale égale à 90% de la largeur axiale L de la bande de roulement,
- la bande de roulement comprenant au moins trois mélanges caoutchouteux, dits premier, deuxième et troisième mélanges caoutchouteux ;
- la partie centrale de la bande de roulement comprenant au moins les premier et deuxième mélanges caoutchouteux, ces deux mélanges caoutchouteux composant au moins 90% du volume de la partie centrale de la bande de roulement,
- dans la partie centrale de la bande de roulement, le premier mélange caoutchouteux étant radialement extérieur au deuxième mélange caoutchouteux et le premier mélange caoutchouteux composant au moins 40% et au plus 60% du volume de la partie centrale de la bande de roulement,
- les premier et troisième mélanges caoutchouteux composant au moins 90% du volume des parties axialement extérieures de la bande de roulement, le troisième mélange caoutchouteux étant axialement extérieur au premier mélange caoutchouteux et composant au moins 40% du volume des parties axialement extérieures,
- le deuxième mélange caoutchouteux ayant une dureté shore DS2 au moins égale à 5 plus la dureté shore DS1 du premier mélange caoutchouteux, la dureté shore DS3 du troisième mélange caoutchouteux étant au plus égale à la dureté shore DS1 du premier mélange caoutchouteux, chaque dureté shore DS1, DS2, DS3 étant mesurée à 23°C selon la norme ASTM 2240-15e1,
- le deuxième mélange caoutchouteux ayant un module d'extension sécant MA300_2 à 300 % de déformation, mesuré à 23° C selon la norme ASTM D 412-16, au moins égal à 0.75 fois le module d'extension sécant MA300_1 à 300 % de déformation du premier mélange caoutchouteux et au plus égal à 1.25 fois le module d'extension sécant MA300_1 à 300 % de déformation du premier mélange caoutchouteux, et le troisième mélange caoutchouteux ayant un module d'extension sécant MA300_3 à 300 % de déformation, mesuré à 23° C selon la norme ASTM D 412-16, au moins égal à 0.9 fois le module d'extension sécant MA300_1 à 300 % de déformation du premier mélange caoutchouteux et au plus égal à 1.3 fois le module d'extension sécant MA300_1 à 300 % de déformation du premier mélange caoutchouteux,
- le deuxième mélange caoutchouteux ayant une perte dynamique tanD0_2, mesurée selon la norme ASTM D 5992 - 96, à une température de 0°C à 10 Hz, au moins égale à la perte dynamique tanDO_1 du premier mélange caoutchouteux mesurée selon la norme ASTM D 5992 - 96, à une température de 0°C à 10 Hz, et le troisième mélange caoutchouteux ayant une perte dynamique tanD0_3, mesurée selon la norme ASTM D 5992 - 96, à une température de 0°C à 10 Hz, au plus égale à 70% de la perte dynamique tanDO_1 du premier mélange caoutchouteux mesurée selon la norme ASTM D 5992 - 96, à une température de 0°C à 10 Hz,
- la perte dynamique tanD23_1 du premier mélange caoutchouteux, mesurée selon la norme ASTM D 5992 - 96, à une température de 23°C à 10 Hz, étant au plus égale à la perte dynamique tanD23_2 du deuxième mélange caoutchouteux, mesurée selon la norme ASTM D 5992 - 96, à une température de 23°C à 10 Hz et la perte dynamique tanD23_3 du troisième mélange caoutchouteux, mesurée selon la norme ASTM D 5992 - 96, à une température de 23°C à 10 Hz, étant au plus égale 70% de la perte dynamique tanD23_1 du premier mélange caoutchouteux, mesurée selon la norme ASTM D 5992 - 96, à une température de 23°C à 10 Hz.

L'invention consiste en l'utilisation originale d'une bande de roulement comprenant essentiellement trois mélanges caoutchouteux. Le premier et le deuxième mélanges caoutchouteux constituent 90% du volume de la partie centrale de la bande de roulement et sont conçus en termes de performance pour venir en contact avec le sol et assurer une très bonne adhérence, le premier à l'état neuf et selon la réalisation de l'invention à l'état usé et le deuxième après usure d'au moins une partie du deuxième mélange caoutchouteux. Associés à ces deux mélanges caoutchouteux de la partie centrale conçus pour leurs performances en adhérence, un troisième mélange caoutchouteux est disposé sur les parties extérieures de la bande de roulement apte à être en contact avec le sol et proche en performance usure des premier et deuxième mélanges caoutchouteux mais à l'hystérèse diminuée afin de compenser, l'augmentation de l'hystérèse des deux autres mélanges caoutchouteux.

Associée à ces trois mélanges caoutchouteux, la bande de roulement peut comprendre par exemple soit :
- une couche de faible épaisseur radiale, inférieure à 0.4 mm, située entre le mélange caoutchouteux enrobant la couche d'éléments de renforcement la plus radialement extérieure de l'armature de sommet et l'interface la plus radialement intérieure de la bande de roulement afin d'assurer la liaison entre ces deux éléments,
- une bande, de faible largeur axiale inférieure à 10 mm, de mélange caoutchouteux, conducteur d'électricité, faisant le lien entre le sol de roulage et les éléments de renforcement du sommet, afin de permettre au pneumatique de satisfaire aux normes de conductivité électrique.

Les premier et deuxième mélanges caoutchouteux représentant 90% du volume de la partie centrale sont disposés radialement, le premier étant radialement extérieur au deuxième. L'un et l'autre des mélanges caoutchouteux possédant des propriétés notamment mécaniques compatibles avec un roulage sur le sol de roulage, ils ont des potentiels d'usure proches l'un de l'autre. Le potentiel d'usure s'exprime notamment par le module d'extension sécant MA300 à 300 % de déformation, mesuré à 23° C selon la norme ASTM D 412-16 -16. Contrairement à des dispositions bien connues pour améliorer la résistance au roulement, le deuxième mélange caoutchouteux n'est pas un matériau mou de très basse hystérèse, de très faible potentiel d'usure. Le deuxième mélange caoutchouteux est rigide et hystérétique. De même disposer d'un premier mélange caoutchouteux trop usant par rapport au deuxième mélange caoutchouteux, diminuerait de trop la période d'usage où la hauteur sculpture permet une bonne adhérence sur sol mouillé. Ainsi le deuxième mélange caoutchouteux a un module d'extension sécant MA300_2 à 300 % de déformation, mesuré à 23° C selon la norme ASTM D 412-16, au moins égal à 0.75 fois le module d'extension sécant MA300_1 à 300 % de déformation du premier mélange caoutchouteux et au plus égal à 1.25 fois le module d'extension sécant MA300_1 à 300 % de déformation du premier mélange caoutchouteux.

Les volumes respectifs des différents volumes des mélanges caoutchouteux sont évalués en considérant les surfaces qu'ils occupent sur une coupe méridienne du pneumatique en considérant la géométrie torique du pneumatique pour évaluer le volume.

Avoir deux mélanges caoutchouteux aux modules d'extension sécant MA300 à 300 % de déformation proches, permet une usure plus régulière et homogène et ainsi d'éviter des formes d'usure irrégulières. Ainsi de préférence le deuxième mélange caoutchouteux a un module d'extension sécant MA300_2 à 300 % de déformation, mesuré à 23° C selon la norme ASTM D 412-16, au moins égal à 0.9 fois le module d'extension sécant MA300_1 à 300 % de déformation du premier mélange caoutchouteux et au plus égal à 1.1 fois le module d'extension sécant MA300_1 à 300 % de déformation du premier mélange caoutchouteux.

Pour atteindre la performance recherchée en adhérence sol mouillé en fin d'usure de la bande de roulement, et de préférence sans avoir recours à une sculpture complexe si l'usage ne le nécessite pas déjà comme pour les pneumatiques hiver, et compenser la diminution de la hauteur sculpture, il est nécessaire que le deuxième mélange caoutchouteux ait une meilleure performance en adhérence que le premier mélange caoutchouteux. Ainsi le deuxième mélange caoutchouteux a une perte dynamique tanD0_2, mesurée selon la norme ASTM D 5992 - 96, à une température de 0°C à 10 Hz, au moins égale à la perte dynamique tanDO_1 du premier mélange caoutchouteux mesurée selon la norme ASTM D 5992 - 96, à une température de 0°C à 10 Hz. Pour atteindre le niveau d'adhérence visé par l'invention, les pertes dynamiques tanDO_1 et tanD0_2, mesurées selon la norme ASTM D 5992 - 96, à une température de 0°C à 10 Hz, sont de préférence au moins égales à 0,7.

Pour atteindre un tel niveau de perte dynamique tanD0 mesurée selon la norme ASTM D 5992 - 96, à une température de 0°C à 10 Hz, les dits premier et deuxième mélanges caoutchouteux comprennent une charge de silice à un taux au moins égal à 100 parties pour cent d'élastomère.

Pour éviter des variations d'adhérence disproportionnées pendant la durée d'utilisation du pneumatique, le deuxième mélange caoutchouteux a une perte dynamique tanD0_2, mesurée selon la norme ASTM D 5992 - 96, à une température de 0°C à 10 Hz, au plus égale 1,2 fois à la perte dynamique tanDO_1 du premier mélange caoutchouteux mesurée selon la norme ASTM D 5992 - 96, à une température de 0°C à 10 Hz.

Pour que l'invention fonctionne, il est par ailleurs nécessaire de créer une synergie entre la position des mélanges caoutchouteux dans la bande de roulement, leurs rigidités et leurs hystérèses. Pour limiter la résistance au roulement et améliorer l'adhérence, l'idée est d'augmenter la rigidité du matériau afin de limiter les déformations créant de la dissipation d'énergie mais également de lutter contre le phénomène du cloquage qui apparait avec la diminution de la hauteur de sculpture liée à l'usure.

Un phénomène bien connu de l'homme de l'art à haute vitesse, est le phénomène de l'hydroplanage. Avec la vitesse, la quantité d'eau à évacuer par seconde dans l'aire de contact augmente. Le taux de creux de la sculpture étant constant, il arrive une vitesse où la quantité d'eau remplit la totalité des creux. En augmentant encore la vitesse, l'eau ne peut plus être évacuée et il se forme un front d'eau à l'avant du pneumatique qui crée une surpression dans l'aire de contact. Sous l'effet de cette pression, la surface de l'aire de contact tend à diminuer, jusqu'à n'être plus suffisante pour assurer l'adhérence du véhicule, entrainant l'hydroplanage.

L'étude de ce phénomène montre qu'un paramètre majeur de l'hydroplanage est le taux de creux de la bande de roulement. Une étude plus fine montre que la déformation du ou des mélanges caoutchouteux de la bande de roulement joue également sur cette performance. Quand la pression de l'eau augmente, suivant la rigidité des mélanges caoutchouteux, se produit ou non un phénomène de cloquage avec une perte de contact d'une partie de l'aire de contact avec le sol de roulage. Ce phénomène serait également présent pour des vitesses réduites et il permettrait de coupler les phénomènes d'adhérence et de rigidité des gommes et également de résistance au roulement. En effet la résistance au roulement dépend de l'hystérèse des mélanges caoutchouteux de la bande de roulement mais aussi de leurs déformations et donc de leurs rigidités.

Avec l'usure de la bande de roulement, le volume de creux diminue et influence l'adhérence. L'évacuation de l'eau dans l'aire de contact se fait à une pression plus élevée. Cette synergie des phénomènes de rigidité et adhérence serait donc d'autant plus efficace que la hauteur sculpture est faible. Par ailleurs l'augmentation de la rigidité permettrait de limiter la résistance au roulement en limitant la déformation. De manière étonnante, ce raisonnement basé sur des phénomènes d'ordre secondaire sur les performances visées, adhérence et résistance au roulement, fonctionnerait pour autant que l'invention est réalisée avec des matériaux de la bande de roulement sur les plages des descripteurs d'hystérèse et de rigidité qui génèrent effectivement une synergie, conformes à l'invention.

Concernant la rigidité, il est essentiel que le deuxième mélange caoutchouteux ait une dureté shore DS2 au moins égale à 5 plus la dureté shore DS1 du premier mélange caoutchouteux, mais de préférence au plus égale à 10 plus la dureté shore DS1 du premier mélange caoutchouteux pour éviter des problèmes d'usure irrégulière.

Concernant l'hystérèse des mélanges caoutchouteux de la bande de roulement, il est essentiel que la perte dynamique tanD23_1, mesurée selon la norme ASTM D 5992 - 96, à une température de 23°C à 10 Hz, est au plus égale à la perte dynamique tanD23_2, mesurée selon la norme ASTM D 5992 - 96, à une température de 23°C à 10 Hz. De préférence pour améliorer plus encore la résistance au roulement, il est avantageux que la perte dynamique tanD23_1, mesurée selon la norme ASTM D 5992 - 96, à une température de 23°C à 10 Hz, est au plus égale à 0.8 fois la perte dynamique tanD23_2, mesurée selon la norme ASTM D 5992 - 96, à une température de 23°C à 10 Hz. Le premier mélange caoutchouteux, étant le plus radialement extérieur, il se déforme donc le plus. Pour une performance en résistance au roulement adéquate, il doit être le moins hystérétique à 23°C.

La synergie obtenue dans la partie centrale de la bande de roulement permet une amélioration des performances d'adhérence, d'usure, de comportement, d'hydroplanage mais dégrade la performance en résistance au roulement. Pour éviter cette dégradation, l'idée est d'introduire un troisième matériau dans la bande de roulement au niveau des parties axialement extérieures de la bande de roulement en tenant compte du caractère spécifique de cette zone.

Le troisième matériau ne voit le sol que lors de sollicitations particulièrement importantes en charge et effort transverses. Les parties axialement extérieures de la bande de roulement sont soumises à des déformations de mise à plat très supérieures à la partie centrale, car ces parties sont doublement courbes, longitudinalement et axialement. Dès lors, mettre le deuxième matériau caoutchouteux amènerait une dégradation de la résistance au roulement très importante et le premier mélange caoutchouteux est peu pertinent au niveau du besoin d'adhérence sur cette zone très peu sollicitée. L'idée est de mettre dans ces parties axialement extérieures de la bande de roulement, un matériau suffisamment rigide pour être en contact avec le sol à proximité du premier mélange caoutchouteux mais d'une hystérèse à 23°C suffisamment faible pour compenser en résistance au roulement l'introduction du deuxième mélange caoutchouteux.

Les premier et troisième mélanges caoutchouteux doivent donc composer en volume au moins 90% des parties axialement extérieures de la bande de roulement, le troisième mélange caoutchouteux étant axialement extérieur au premier mélange caoutchouteux, c'est-à-dire dans les zones de plus grandes déformations pour diminuer la résistance au roulement. Le troisième mélange caoutchouteux compose au moins 40% préférentiellement 75%, préférentiellement 90% du volume des parties axialement extérieures afin d'amener un maximum d'amélioration de la résistance au roulement.

Il est possible d'avoir des solutions de répartition de premier et troisième mélanges caoutchouteux dans les parties axialement extérieures de la bande de roulement, où à la même coordonnée axiale, il y ait présence des deux mélanges caoutchouteux. Dans ce cas, étant donné les meilleures propriétés d'adhérence du premier mélange caoutchouteux, une solution préférée est que le troisième mélange caoutchouteux de la bande de roulement soit radialement intérieur au premier mélange caoutchouteux.

Pour diminuer la résistance au roulement de manière significative, il est essentiel que la perte dynamique tanD23_3 du troisième mélange caoutchouteux, mesurée selon la norme ASTM D 5992 - 96, à une température de 23°C à 10 Hz, est au plus égale 70% de la perte dynamique tanD23_1 du premier mélange caoutchouteux, mesurée selon la norme ASTM D 5992 - 96, à une température de 23°C à 10 Hz. De préférence la perte dynamique tanD23_3, du troisième mélange caoutchouteux, mesurée selon la norme ASTM D 5992 - 96, à une température de 23°C à 10 Hz, est au plus égale à 0.3, préférentiellement au plus égale à 0.25, préférentiellement au plus égale à 0.2.

Cette baisse de la perte dynamique à 23°C s'accompagne d'une baisse de la perte dynamique à 0°C. Il est essentiel que le troisième mélange caoutchouteux ait une perte dynamique tanD0_3, mesurée selon la norme ASTM D 5992 - 96, à une température de 0°C à 10 Hz, au plus égale à 70% de la perte dynamique tanDO_1 du premier mélange caoutchouteux mesurée selon la norme ASTM D 5992 - 96, à une température de 0°C à 10 Hz. Il est toutefois préférable que le troisième mélange caoutchouteux présente une performance en adhérence suffisamment élevée pour une bonne linéarité de la performance dans les sollicitations extrêmes. Pour cela il est préféré que la perte dynamique tanD0_3 du troisième mélange caoutchouteux de la bande de roulement, mesurée selon la norme ASTM D 5992 - 96, à une température de 0°C à 10 Hz, soit au moins égale à 0,22, préférentiellement au moins égale à 0,28.

Etant donné le mode de fonctionnement des parties axialement extérieures, cette baisse de l'hystérèse doit également s'accompagner d'une baisse de la rigidité du troisième matériau vis-à-vis du deuxième matériau et également du premier afin de faciliter la mise à plat. Ainsi il est essentiel que la dureté shore DS3 du troisième mélange caoutchouteux soit au plus égale à la dureté shore DS1 du premier mélange caoutchouteux et donc ipso facto inférieure à la dureté shore DS2 du deuxième matériau de la bande de roulement et de préférence au plus égale à la dureté shore DS1 du premier mélange caoutchouteux moins 3. Néanmoins une différence de dureté shore entre les premier et troisième mélange caoutchouteux pourraient sensibiliser ces parties à la microfissuration de leur interface et générer de l'usure irrégulière. Ainsi il est préféré que leurs deux duretés shore soient de valeurs proches à savoir il est préférable que le troisième mélange caoutchouteux ait une dureté shore DS3 au moins égale à la dureté shore DS1 du premier mélange caoutchouteux moins 7, et dans les plages des mélanges caoutchouteux utilisés pour les pneumatiques de Tourisme préférentiellement au moins égale à 45, préférentiellement au moins égale à 50.

Les parties axialement extérieures peuvent tout comme la partie centrale comprendre une couche de faible épaisseur radiale, inférieure à 0.4 mm, située entre le mélange caoutchouteux enrobant la couche d'éléments de renforcement la plus radialement extérieure de l'armature de sommet et l'interface la plus radialement intérieure de la bande de roulement afin d'assurer la liaison entre ces deux éléments.

La bande de roulement est conçue de telle sorte que le troisième mélange caoutchouteux touche le sol soit à l'état neuf, soit avant l'usure complète du pneumatique. Il est essentiel que le troisième matériau ait la capacité à entrer en contact avec le sol. De plus, il doit être suffisamment proche en propriété mécanique du premier mélange caoutchouteux afin que l'usure des parties axialement extérieures de la bande de roulement soit homogène avec celle de la partie centrale, notamment aux interfaces entre ces parties. Il est donc essentiel que le troisième mélange caoutchouteux ait un module d'extension sécant MA300_3 à 300 % de déformation, mesuré à 23° C selon la norme ASTM D 412-16, au moins égal à 0.9 fois le module d'extension sécant MA300_1 à 300 % de déformation du premier mélange caoutchouteux. De même pour éviter une tendance à développer de l'usure irrégulière, il est préférable que le troisième mélange caoutchouteux ait un module d'extension sécant MA300_3 à 300 % de déformation, mesuré à 23° C selon la norme ASTM D 412-16, au moins égal à 1.5 MPa, préférentiellement au moins égal à 1.7 MPa, au plus égal à 2.4 MPa préférentiellement au plus égal à 2.2 MPa.

Pour atteindre ces performances, une solution préférée est que le troisième mélange caoutchouteux comprend en masse une charge de silice au plus égale à 100 parties pour cent d'élastomère.

Les propriétés des mélanges caoutchouteux sont mesurées sur des éprouvettes collées extraites du pneumatique. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre « d » de l'éprouvette est de 10 mm [0 à + 0.04mm], l'épaisseur « L » de chacune des portions de mélange caoutchouteux est de 2 mm [1.85-2.20].

Ces propriétés sont mesurées sur un viscoanalyseur de type Metravib VA4000 sur des éprouvettes vulcanisées.

Les termes modules complexes, élastiques et visqueux désignent des propriétés dynamiques bien connues de l'homme du métier. Le « module complexe » G* est défini par la relation suivante : G*= √(***G*'²** + ***G*"²**) dans laquelle G' représente le module élastique et G" représente le module visqueux. L'angle de phase δ entre la force et le déplacement traduit en perte dynamique tanδ est égal au rapport G"/G'

On enregistre la réponse d'un échantillon de mélange caoutchouteux vulcanisé soumis à une sollicitation sinusoïdale en cisaillement simple alterné, à la fréquence de 10 Hz à contrainte imposée, symétriquement autour de sa position d'équilibre. Une accommodation de l'éprouvette est réalisée préalablement à la mesure de balayage en Température. L'éprouvette est pour cela sollicitée en cisaillement sinusoïdal à 10Hz, à 100% de déformation crête-crête, à 23°C.

La mesure en balayage en Température est réalisée au cours d'une rampe de température croissante de 1,5°C par minute, depuis une température Tmin inférieure à la température de transition vitreuse Tg du matériau, jusqu'à une température Tmax qui peut correspondre au plateau caoutchoutique du matériau. Avant de commencer le balayage, on stabilise l'échantillon à la température Tmin pendant 20 minutes pour avoir une température homogène au sein de l'échantillon. Les résultats exploités à la température et contrainte choisies sont généralement le module complexe de cisaillement dynamique G*, comprenant une partie élastique G', une partie visqueuse G" et l'angle de phase δ entre la force et le déplacement traduit en facteur de perte tanD, égale au rapport G"/G'. La température de transition vitreuse Tg est la température à laquelle la perte dynamique tanD atteint un maximum lors du balayage en température.

Pour un fonctionnement optimal de l'invention, il est préféré que le premier mélange caoutchouteux constitue la quasi-totalité, hors des mélanges caoutchouteux éventuellement nécessaires pour assurer la conductivité du pneumatique, de la partie de la bande de roulement la plus radialement extérieure. Ainsi il est préféré que le premier mélange caoutchouteux constitue au moins 90% du volume de la partie centrale de la bande de roulement radialement extérieure aux points radialement extérieurs du point le plus radialement extérieur du témoin d'usure et distant dudit point du témoin d'usure d'une distance radiale égale à 2 mm.

Une solution préférée est que le deuxième mélange caoutchouteux soit présent au-dessus du témoin d'usure afin que l'apport en adhérence soit effectif en fin de vie du pneumatique, avec une limite à ne pas dépasser de 2 mm au-dessus du témoin d'usure afin que l'impact de l'hystérèse à 23°C de ce deuxième mélange caoutchouteux sur la résistance au roulement reste limité. Ainsi une solution préférée est que le deuxième mélange caoutchouteux compose au moins 20% de la portion, de la partie centrale de la bande de roulement, comprise entre la droite axiale passant par le point le plus radialement extérieur du témoin d'usure et les points radialement extérieurs au point le plus radialement extérieur du témoin d'usure et situé à une distance radiale égale à 2 mm de ce dit point le plus radialement extérieur du témoin d'usure.

Une solution avantageuse pour améliorer la résistance au roulement est que les fonds de la sculpture, les fonds des sillons circonférentiels, les fonds de rainures qui ne participent pas à l'adhérence, ni à la rigidité des motifs de sculpture mais qui participe à la performance en résistance au roulement, soient réalisés dans le premier mélange caoutchouteux. Ainsi une solution avantageuse est que pour un pneumatique comprenant au moins un sillon circonférentiel, la partie de la bande de roulement, d'une épaisseur radiale de 0,5 mm, à l'aplomb de la surface de fonds de chaque sillon est constituée par le premier mélange caoutchouteux.

Une solution préférée pour une bonne résistance à l'agression de l'armature de sommet est qu'entre le fond des rainures de la sculpture et les éléments de renforcement les plus radialement extérieurs de l'armature de sommet, se trouve une épaisseur de gomme de la bande de roulement dont l'épaisseur radiale soit au moins égale à 1 mm. Cette épaisseur de mélange caoutchouteux est principalement dans le premier mélange caoutchouteux de la bande de roulement. Pour optimiser la résistance au roulement, il convient que cette épaisseur soit la plus fine possible tout en permettant la protection de l'armature de sommet en cas de choc, à savoir que cette épaisseur soit au plus égale à 2,5 mm, de préférence au plus égale à 2 mm. Cette épaisseur est mesurée sur une coupe méridienne depuis les points les plus radialement extérieurs des éléments de renforcement de la couche de sommet la plus radialement extérieure, jusqu'aux points des surfaces de fonds des rainures ou des sillons circonférentiels.

Ainsi une solution préférée est que la distance radiale entre les points les plus radialement intérieurs des rainures et l'armature de sommet est au moins égale à 1 mm et au plus égale à 2.5 mm, préférentiellement au plus égale à 2 mm.

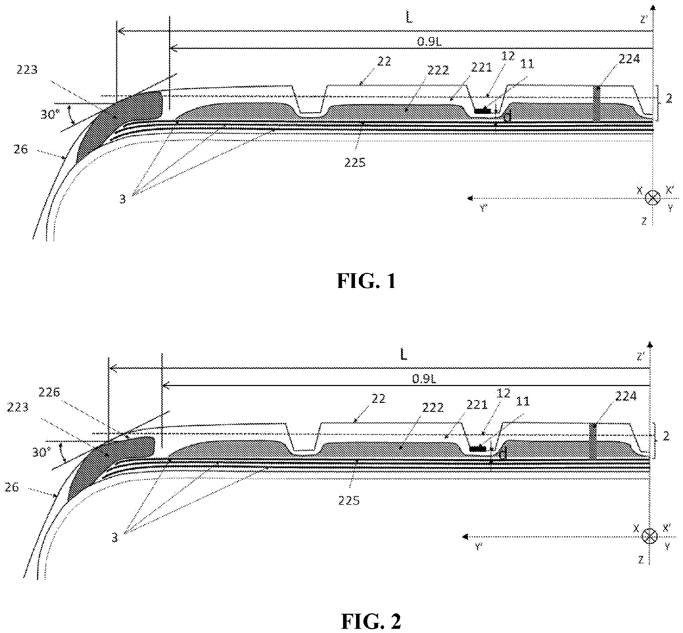

Les caractéristiques et autres avantages de l'invention seront mieux compris à l'aide des figures 1 et 2 représentant une demi coupe méridienne du sommet d'un pneumatique selon l'invention.

Le pneumatique comporte une bande de roulement 2 destinée à entrer en contact avec un sol par l'intermédiaire d'une surface de roulement 22. La bande de roulement comporte au moins trois mélanges caoutchouteux 221, 222, 223. Les premier et deuxième mélanges caoutchouteux 221,222 composent au moins 90% du volume de la partie centrale de la bande de roulement. La partie centrale est d'une largeur axiale égale à 90% de la largeur axiale L de la bande de roulement. Les premier et troisième mélanges caoutchouteux 221,223 composent au moins 90% des parties axialement extérieures de la bande de roulement.

La bande de roulement 2 peut comporter également dans la partie centrale une partie 224 de faible largeur axiale faisant le lien entre l'armature de sommet et la surface de roulement afin que le pneumatique réponde aux normes de conductivité électrique.

Il est également possible que la bande de roulement comporte un mélange caoutchouteux de couplage 225 d'une épaisseur radiale au plus égale à 0.4 mm afin d'assurer le collage entre l'armature de sommet 3 et la bande de roulement 2.

Sont représentés également sur la figure, le témoin d'usure et son point le plus radialement extérieur 11 et les points 12 radialement extérieurs audit point 11 à une distance radiale de 2 mm. La partie de la bande de roulement radialement extérieure aux points 12 comporte au moins 90% du volume du premier mélange caoutchouteux 221, le pourcentage de volume restant étant le mélange caoutchouteux conducteur 224 de faible largeur axiale et permettant la jonction entre la surface de roulement et l'armature de sommet.

La partie de la bande de roulement comprise entre la droite passant par le point 11 et la droite constituée par les points 12 comporte 40% en volume du deuxième mélange caoutchouteux.

Le pneumatique comprend en outre une armature de sommet 3 radialement intérieure à la bande de roulement 2, et comprenant plusieurs couches d'éléments de renforcement. Les 2 couches radialement intérieures, représentées sur la figure, sont deux couches de travail, dont les éléments de renforcement, parallèles entre eux dans une même couche, forment des angles avec la direction circonférentielle, dont la valeur absolue est comprise entre 17 et 50°. Les éléments de renforcement sont croisés d'une couche à l'autre. La couche la plus radialement extérieure est une couche de frettage dont les éléments de renforcement forment un angle compris entre -7 et +7° avec la direction circonférentielle.

Les figures montrent également comment déterminer la largeur L de la bande de roulement. La largeur L de la bande de roulement est déterminée sur un pneumatique monté, sur une jante nominale et gonflé à la pression nominale. Dans le cas d'une frontière évidente entre la surface de roulement et le reste du pneumatique, la largeur de la bande de roulement est déterminée trivialement par l'homme du métier. Dans le cas où la surface de roulement 21 est continue avec la surface latérale extérieure du flanc 26 du pneumatique, la limite axiale de la surface de roulement passe par le point pour lequel l'angle entre la tangente à la surface de roulement 21 et une direction axiale YY' est égal à 30°. Lorsqu'il existe sur un plan méridien, plusieurs points pour lesquels ledit angle est égal à 30°, on retient le point radialement le plus à l'extérieur. La largeur L de la bande de roulement est égale à la distance axiale entre les deux limites axiales de la surface de roulement de part et d'autre du plan équateur.

La figure 1 montre une réalisation de l'invention dans laquelle le troisième mélange caoutchouteux 223 est axialement extérieur au premier mélange caoutchouteux sur son épaisseur radiale. La figure 2 montre une variante de l'invention où le troisième mélange caoutchouteux est axialement extérieur au premier mélange caoutchouteux 221 mais où ces deux mélanges caoutchouteux sont présents sur une portion 226 de la partie axialement extérieure de la bande de roulement. Dans cette configuration, la solution préférée est que le troisième mélange caoutchouteux soit radialement intérieur au premier mélange caoutchouteux comme représenter sur la figure 2.

Les inventeurs ont réalisé des tests sur la base de l'invention pour un pneumatique de dimension 225/45 R17, d'une largeur nominale de 225 mm.

Le pneumatique témoin T d'une conception classique et hors invention comprenant deux mélanges caoutchouteux 221 et 222. Le premier mélange caoutchouteux est plus rigide, plus hystérétique donc plus adhérent mais plus dissipateur que le deuxième mélange caoutchouteux conçu dans un objectif classique de baisse de la résistance au roulement. Le deuxième mélange caoutchouteux n'est donc pas conçu pour être en contact avec le sol de roulage. Les deux mélanges caoutchouteux ont pour caractéristiques respectives :
- le premier mélange caoutchouteux a une dureté shore DS1 a égale à 64 et la dureté shore DS2 du premier mélange caoutchouteux a une dureté shore égale à 63.5, chaque dureté shore DS1, DS2, étant mesurée à 23°C selon la norme ASTM 2240-15e1,
- le premier mélange caoutchouteux a un module d'extension sécant MA300_1 à 300 % de déformation, mesuré à 23° C selon la norme ASTM D 412-16, égal à 1.77 MPa. Le module d'extension sécant MA300_2 à 300 % de déformation du deuxième mélange caoutchouteux ne peut être mesuré, il rompt avant d'atteindre les conditions de mesure du MA300, car ce mélange caoutchouteux a une très basse hystérèse, et n'est pas conçu pour être en contact avec le sol de roulage.
- le deuxième mélange caoutchouteux a une perte dynamique tanD0_2, mesurée selon la norme ASTM D 5992 - 96, à une température de 0°C à 10 Hz, égale à 0.23 et la perte dynamique tanDO_1 du premier mélange caoutchouteux mesurée selon la norme ASTM D 5992 - 96, à une température de 0°C à 10 Hz, est égale à 0.69,
- la perte dynamique tanD23_1 du premier mélange caoutchouteux, mesurée selon la norme ASTM D 5992 - 96, à une température de 23°C à 10 Hz, est égale à 0.38, la perte dynamique tanD23_2 du deuxième mélange caoutchouteux, mesurée selon la norme ASTM D 5992 - 96, à une température de 23°C à 10 Hz est égale à 0.15.

La bande de roulement du pneumatique T est composée de 70% en volume du premier mélange caoutchouteux et 30% en volume du deuxième mélange caoutchouteux. Les dispositions des deux mélanges caoutchouteux sont optimisées conformément à l'état de l'art pour le pneumatique T, à savoir que les parties de la bande de roulement en dessous des points les plus radialement extérieurs des témoins d'usure sont composées dans le deuxième mélange caoutchouteux sur toute la largeur de la bande de roulement.

L'invention consiste à inverser cette logique de conception en disposant un mélange caoutchouteux de la bande de roulement plus rigide, plus adhérent et donc plus dissipatif également avec une performance usure proche du premier mélange caoutchouteux, radialement intérieurement au premier mélange caoutchouteux et en introduisant un troisième mélange caoutchouteux dans les parties radialement extérieures de la bande de roulement. La partie centrale de la bande de roulement est composée de 58% du premier mélange caoutchouteux et 42% du deuxième mélange caoutchouteux. Les parties axialement extérieures de la bande de roulement sont composées du troisième mélange caoutchouteux sur le pneumatique A1.

Les trois mélanges caoutchouteux du pneumatique A1 ont pour caractéristiques respectives :
- le deuxième mélange 222 caoutchouteux a une dureté shore DS2 égale à 64, le premier mélange caoutchouteux a une dureté shore DS1 égale à 57, le troisième mélange caoutchouteux a une dureté shore DS3 égale à 52, chaque dureté shore DS1, DS2, DS3 étant mesurée à 23°C selon la norme ASTM 2240-15e1,
- le deuxième mélange caoutchouteux 222 a un module d'extension sécant MA300_2 à 300 % de déformation, mesuré à 23° C selon la norme ASTM D 412-16, égal à 1.6 MPa soit 1.07 fois le module d'extension sécant MA300_1 à 300 % de déformation du premier mélange caoutchouteux 221, égal à 1.5 MPa. Le troisième mélange caoutchouteux 223 a un module d'extension sécant MA300_3 à 300 % de déformation, mesuré à 23° C selon la norme ASTM D 412-16, égal à 1.8 MPa représentant une déchéance en usure vis-à-vis des premier et deuxième mélanges caoutchouteux 221, 222 entre 10 et 15%.
- les premier et deuxième mélanges caoutchouteux 221, 222 ont respectivement des pertes dynamiques tandDO_1 et tanD0_2, mesurée selon la norme ASTM D 5992 - 96, à une température de 0°C à 10 Hz, égales à 0.76 et la perte dynamique tanD0_3 du troisième mélange caoutchouteux 223 mesurée selon la norme ASTM D 5992 - 96, à une température de 0°C à 10 Hz, est égale à 0.29, ce qui le rend apte à être utilisé comme un mélange caoutchouteux en contact avec le sol.
- la perte dynamique tanD23_1 du premier mélange caoutchouteux 221, est égale à 0.39, la perte dynamique tanD23_2 du deuxième mélange caoutchouteux 222 est égale à 0.51 et la perte dynamique tanD23_3 du troisième mélange caoutchouteux 223 est égale à 0.13, toutes mesurées selon la norme ASTM D 5992 - 96, à une température de 23°C à 10 Hz.

Les compositions des premier, deuxième et troisième mélanges caoutchouteux 221, 222, 223 du pneumatique A1 sont décrites en référence au tableau 1 ci-dessous.

**Tableau 1**

| | Premier mélange caoutchouteux 221 | Deuxième mélange caoutchouteux 222 | Troisième mélange caoutchouteux 223 |
|---|---|---|---|
| Elastomère 1 | 100 | / | / |
| Elastomère 2 | / | 100 | / |
| Elastomère 3 | / | / | 100 |
| Noir de carbone | 4 | 4 | 3 |
| Silice | 110 | 150 | 60 |
| Résine | 60 | 82 | 16 |
| Antioxydant | 3,80 | 5,20 | 2 |
| Silane Liquide | 8,80 | 12 | 4,8 |
| Acide stéarique | 3,00 | 3,00 | 2,00 |
| DPG | 2,40 | 3,30 | 1,40 |
| ZnO | 0,90 | 0,90 | 0,80 |
| CBS | 2,30 | 2,30 | 1,70 |
| Souffre | 1,00 | 1,00 | 1,00 |

Chaque élastomère 1, 2 et 3 est identique à respectivement chaque élastomère C, D et A tel que décrit dans WO2018115722. Le noir de carbone est de grade N234 et fourni par Cabot Corporation. La silice est de type HDS et fournie par Rhodia sous la référence Z1165MP. La résine est fournie par ExxonMobil chemicals sous la référence PR-383. L'antioxydant est la N-(1,3-diméthylbutyl)-N'-phényl-p-phénylènediamine fournie par Flexsys. Le silane liquide est fourni par Degussa sous la référence TESPT Si69. La DPG est la diphénylguanidine fournie par Flexsys sous la référence Perkacit. Le CBS est le N-cyclohexyl-2-benzothiazol-sulfénamide fournie par la Flexsys sous la référence Santocure CBS.

D'autres compositions peuvent bien entendu être utilisées en faisant varier les taux des différents constituants des compositions et ce afin de d'obtenir des propriétés adaptées à des usages particuliers et ce, sans pour autant sortir du cadre de l'invention telle que définie dans les revendications.

On pourra notamment s'inspirer des compositions divulguées dans WO2012069585, WO2012069565 et WO2012069567 qui présentent un taux de silice relativement élevé.

Les pneumatiques T et A1 ont été testés sur différentes performances. Par rapport au pneumatique T (en base 100), le pneumatique A1 selon l'invention permet d'améliorer de +7% le freinage mouillé à neuf sur béton bitumineux à 20°C et de +9% le freinage mouillé en fin de vie, à 2 mm de hauteur sculpture restante. L'adhérence transversale mouillé est également améliorée (+3.5%), le comportement sec sur circuit est équivalent à la référence et la résistance au roulement est égale à celle du témoin.

Dans le cas d'un pneumatique du type de l'invention mais ou les parties axialement extérieures sont composées du premier mélange caoutchouteux. On obtient les mêmes performances mais avec une pénalisation de l'ordre de 5 à 10% en résistance au roulement.

L'invention seule permet donc d'obtenir des performances en adhérence à neuf et en fin de vie du pneumatique améliorée tout en conservant une performance en résistance au roulement égale au témoin.

## Revendications

1. Pneumatique (1) pour véhicule de tourisme comprenant :
• une bande de roulement (2) destinée à entrer en contact avec un sol par l'intermédiaire d'une surface de roulement (22), deux bourrelets destinés à venir en contact avec une jante et deux flancs reliant le sommet aux bourrelets,
• la bande de roulement étant radialement extérieure à une armature de sommet (3), ladite armature de sommet comprenant au moins une couche de sommet comprenant des éléments de renforcement,
• la bande de roulement ayant une partie centrale et deux parties axialement extérieures, la partie centrale étant d'une largeur axiale égale à 90% de la largeur axiale L de la bande de roulement (2),
• la bande de roulement comprenant au moins trois mélanges caoutchouteux, dits premier, deuxième et troisième mélanges caoutchouteux (221, 222, 223) ;
• la partie centrale de la bande de roulement comprenant au moins les premier et deuxième mélanges caoutchouteux (221, 222), ces deux mélanges caoutchouteux composant au moins 90% du volume de la partie centrale de la bande de roulement (2),
• dans la partie centrale de la bande de roulement, le premier mélange caoutchouteux (221) étant radialement extérieur au deuxième mélange caoutchouteux (222) et le premier mélange caoutchouteux (221) composant au moins 40% et au plus 60% du volume de la partie centrale de la bande de roulement (2),
• les premier et troisième mélanges caoutchouteux (221, 223) composant au moins 90% du volume des parties axialement extérieures de la bande de roulement, le troisième mélange caoutchouteux étant axialement extérieur au premier mélange caoutchouteux (221) et composant au moins 40% du volume des parties axialement extérieures,
**caractérisé en ce que** le deuxième mélange caoutchouteux (222) a une dureté shore DS2 au moins égale à 5 plus la dureté shore DS1 du premier mélange caoutchouteux (221), la dureté shore DS3 du troisième mélange caoutchouteux (223) est au plus égale à la dureté shore DS1 du premier mélange caoutchouteux (221), chaque dureté shore DS1, DS2, DS3 étant mesurée à 23°C selon la norme ASTM 2240-15e1,
**en ce que** le deuxième mélange caoutchouteux (222) a un module d'extension sécant MA300_2 à 300 % de déformation, mesuré à 23° C selon la norme ASTM D 412-16, au moins égal à 0.75 fois le module d'extension sécant MA300_1 à 300 % de déformation du premier mélange caoutchouteux (221) et au plus égal à 1.25 fois le module d'extension sécant MA300_1 à 300 % de déformation du premier mélange caoutchouteux (221), et le troisième mélange caoutchouteux (223) a un module d'extension sécant MA300_3 à 300 % de déformation, mesuré à 23° C selon la norme ASTM D 412-16, au moins égal à 0.9 fois le module d'extension sécant MA300_1 à 300 % de déformation du premier mélange caoutchouteux (221) et au plus égal à 1.3 fois le module d'extension sécant MA300_1 à 300 % de déformation du premier mélange caoutchouteux (221),
**en ce que** le deuxième mélange caoutchouteux (222) a une perte dynamique tanD0_2, mesurée selon la norme ASTM D 5992 - 96, à une température de 0°C à 10 Hz, au moins égale à la perte dynamique tanDO_1 du premier mélange caoutchouteux (221) mesurée selon la norme ASTM D 5992 - 96, à une température de 0°C à 10 Hz, et le troisième mélange caoutchouteux (223) a une perte dynamique tanD0_3, mesurée selon la norme ASTM D 5992 - 96, à une température de 0°C à 10 Hz, au plus égale à 70% de la perte dynamique tanDO_1 du premier mélange caoutchouteux (221) mesurée selon la norme ASTM D 5992 - 96, à une température de 0°C à 10 Hz,
**en ce que** la perte dynamique tanD23_1 du premier mélange caoutchouteux (221), mesurée selon la norme ASTM D 5992 - 96, à une température de 23°C à 10 Hz, est au plus égale à la perte dynamique tanD23_2 du deuxième mélange caoutchouteux (222), mesurée selon la norme ASTM D 5992 - 96, à une température de 23°C à 10 Hz et la perte dynamique tanD23_3 du troisième mélange caoutchouteux (223), mesurée selon la norme ASTM D 5992 - 96, à une température de 23°C à 10 Hz, est au plus égale 70% de la perte dynamique tanD23_1 du premier mélange caoutchouteux (221), mesurée selon la norme ASTM D 5992 - 96, à une température de 23°C à 10 Hz.

2. Pneumatique (1) selon la revendication 1, dans lequel les dits premier et deuxième mélanges caoutchouteux (221, 222) de la bande de roulement (2) comprennent une charge de silice au moins égale en masse à 100 parties pour cent d'élastomère, dans lequel les pertes dynamiques tanDO_1 et tanD0_2 du premier et deuxième mélanges caoutchouteux (221, 222) de la bande de roulement (2), mesurées selon la norme ASTM D 5992 - 96, à une température de 0°C à 10 Hz, sont au moins égales à 0,7, dans lequel le troisième mélange caoutchouteux (223) de la bande de roulement (2) comprend une charge de silice au plus égale en masse à 100 parties pour cent d'élastomère et dans lequel la perte dynamique tanD0_3 du troisième mélange caoutchouteux (223) de la bande de roulement (2), mesurée selon la norme ASTM D 5992 - 96, à une température de 0°C à 10 Hz, est au moins égale à 0,22, préférentiellement au moins égale à 0,28.

3. Pneumatique (1) selon l'une quelconque des revendications précédentes, dans lequel le deuxième mélange caoutchouteux (222) a une perte dynamique tanD0_2, mesurée selon la norme ASTM D 5992 - 96, à une température de 0°C à 10 Hz, au plus égale 1,2 fois à la perte dynamique tanDO_1 du premier mélange caoutchouteux (221) mesurée selon la norme ASTM D 5992 - 96, à une température de 0°C à 10 Hz.

4. Pneumatique (1) selon l'une quelconque des revendications précédentes, dans lequel la perte dynamique tanD23_1 du premier mélange caoutchouteux (221), mesurée selon la norme ASTM D 5992 - 96, à une température de 23°C à 10 Hz, est au plus égale à 0.8 fois la perte une perte dynamique tanD23_2 du deuxième mélange caoutchouteux (222), mesurée selon la norme ASTM D 5992 - 96, à une température de 23°C à 10 Hz et la perte dynamique tanD23_3 du troisième mélange caoutchouteux (223), mesurée selon la norme ASTM D 5992 - 96, à une température de 23°C à 10 Hz, est au plus égale à 0.3, préférentiellement au plus égale à 0.25, préférentiellement au plus égale à 0.2.

5. Pneumatique (1) selon l'une quelconque des revendications précédentes, dans lequel le deuxième mélange caoutchouteux (222) a un module d'extension sécant MA300_2 à 300 % de déformation, mesuré à 23° C selon la norme ASTM D 412-16, au moins égal à 0.9 fois le module d'extension sécant MA300_1 à 300 % de déformation du premier mélange caoutchouteux (221) et au plus égal à 1.1 fois le module d'extension sécant MA300_1 à 300 % de déformation du premier mélange caoutchouteux (221).

6. Pneumatique (1) selon l'une quelconque des revendications précédentes, dans lequel le troisième mélange caoutchouteux (223) a un module d'extension sécant MA300_3 à 300 % de déformation, mesuré à 23° C selon la norme ASTM D 412-16, au moins égal à 1.5 MPa, préférentiellement au moins égal à 1.7 MPa, au plus égal à 2.4 MPa préférentiellement au plus égal à 2.2 MPa.

7. Pneumatique (1) selon l'une quelconque des revendications précédentes, dans lequel le deuxième mélange caoutchouteux (222) a une dureté shore DS2 au plus égale à 10 plus la dureté shore DS1 du premier mélange caoutchouteux (221).

8. Pneumatique (1) selon l'une quelconque des revendications précédentes, dans lequel le troisième mélange caoutchouteux (223) a une dureté shore DS3 au plus égale à la dureté shore DS1 du premier mélange caoutchouteux (221) moins 3, au moins égale à la dureté shore DS1 du premier mélange caoutchouteux (221) moins 7, préférentiellement au moins égale à 45, au moins égale à 50.

9. Pneumatique (1) selon l'une quelconque des revendications précédentes, dans lequel le troisième mélange caoutchouteux (223) de la bande de roulement est radialement intérieur au premier mélange caoutchouteux (221) de la bande de roulement sur une partie de la bande de roulement.

10. Pneumatique (1) selon l'une quelconque des revendications précédentes, dans lequel le troisième mélange caoutchouteux (223) de la bande de roulement représente au moins 75% préférentiellement au moins 90% du volume des parties axialement extérieures de la bande de roulement.

11. Pneumatique (1) selon l'une quelconque des revendications précédentes, comprenant au moins un témoin d'usure et dans lequel le premier mélange caoutchouteux (221) constitue au moins 90% du volume de la partie centrale de la bande de roulement radialement extérieure aux points radialement extérieurs du point (12) le plus radialement extérieur du témoin d'usure (11), distant dudit point (11) du témoin d'usure d'une distance radiale égale à 2 mm.

12. Pneumatique (1) selon l'une quelconque des revendications précédentes, comprenant au moins un témoin d'usure et dans lequel le deuxième mélange caoutchouteux (222) compose au moins 20% en volume de la portion, de la partie centrale de la bande de roulement, comprise entre la droite axiale passant par le point le plus radialement extérieur du témoin d'usure (11) et les points (12) radialement extérieurs au point le plus radialement extérieur du témoin d'usure (11) et situé à une distance radiale égale à 2 mm de ce dit point (11) le plus radialement extérieur du témoin d'usure.

13. Pneumatique (1) selon l'une quelconque des revendications précédentes, comprenant au moins un sillon circonférentiel et dans lequel la partie de la bande de roulement (2), d'une épaisseur radiale de 0,5 mm, à l'aplomb de la surface de chaque sillon circonférentiel est constituée par le premier mélange caoutchouteux (221).

14. Pneumatique (1) selon l'une quelconque des revendications précédentes, comprenant au moins des rainures et dans lequel la distance radiale (d) entre les points les plus radialement intérieurs des rainures et l'armature de sommet est au moins égale à 1 mm et au plus égale à 2.5 mm, préférentiellement au plus égale à 2 mm.

## Patentansprüche

1. Reifen (1) für einen Personenkraftwagen, umfassend:
• einen Laufstreifen (2), der dazu bestimmt ist, über eine Lauffläche (22) mit einem Boden in Kontakt zu gelangen, zwei Wülste, die dazu bestimmt sind, mit einer Felge in Kontakt zu gelangen, und zwei Flanken, die den Gürtel mit den Wülsten verbinden,
• wobei der Laufstreifen radial außerhalb einer Gürtelbewehrung (3) ist, wobei die Gürtelbewehrung mindestens eine Gürtellage umfasst, die Verstärkungselemente umfasst,
• wobei der Laufstreifen einen zentralen Teil und zwei axial äußere Teile hat, wobei der zentrale Teil eine axiale Breite von 90 % der axialen Breite L des Laufstreifens (2) hat,
• wobei der Laufstreifen mindestens drei Kautschukmischungen umfasst, erste, zweite und dritte Kautschukmischungen (221, 222, 223) genannt;
• wobei der zentrale Teil des Laufstreifens mindestens die ersten und zweiten Kautschukmischungen (221, 222) umfasst, wobei diese beiden Kautschukmischungen mindestens 90 % des Volumens des zentralen Teils des Laufstreifens (2) ausmachen,
• wobei in dem zentralen Teil des Laufstreifens die erste Kautschukmischung (221) radial außerhalb der zweiten Kautschukmischung (222) ist und die erste Kautschukmischung (221) mindestens 40 % und höchstens 60 % des Volumens des zentralen Teils des Laufstreifens (2) ausmacht,
• wobei die ersten und dritten Kautschukmischungen (221, 223) mindestens 90 % des Volumens der axial äußeren Teile des Laufstreifens ausmachen, wobei die dritte Kautschukmischung axial außerhalb der ersten Kautschukmischung (221) ist und mindestens 40 % des Volumens der axial äußeren Teile ausmacht,
**dadurch gekennzeichnet, dass** die zweite Kautschukmischung (222) eine Shore-Härte DS2 von mindestens 5 plus der Shore-Härte DS1 der ersten Kautschukmischung (221) aufweist, wobei die Shore-Härte DS3 der dritten Kautschukmischung (223) höchstens gleich der Shore-Härte DS1 der ersten Kautschukmischung (221) ist, wobei jede Shore-Härte DS1, DS2, DS3 bei 23 °C nach der Norm ASTM 2240-15e1 gemessen wird,
**dadurch, dass** die zweite Kautschukmischung (222) einen Sekantendehnungsmodul MA300_2 bei 300 % Verformung, gemessen bei 23 °C nach der Norm ASTM D 412-16, von mindestens gleich dem 0,75-Fachen des Sekantendehnungsmoduls MA300_1 bei 300 % Verformung der ersten Kautschukmischung (221) und höchstens gleich dem 1,25-Fachen des Sekantendehnungsmoduls MA300_1 bei 300 % Verformung der ersten Kautschukmischung (221) aufweist und die dritte Kautschukmischung (223) einen Sekantendehnungsmodul MA300_3 bei 300 % Verformung, gemessen bei 23 °C nach der Norm ASTM D 412-16, von mindestens gleich dem 0,9-Fachen des Sekantendehnungsmoduls MA300_1 bei 300 % Verformung der ersten Kautschukmischung (221) und höchstens gleich dem 1,3-Fachen des Sekantendehnungsmoduls MA300_1 bei 300 % Verformung der ersten Kautschukmischung (221) aufweist,
**dadurch, dass** die zweite Kautschukmischung (222) einen dynamischen Verlust tanD0_2, gemessen nach der Norm ASTM D 5992 - 96 bei einer Temperatur von 0 °C bei 10 Hz, von mindestens gleich dem dynamischen Verlust tanD0_1 der ersten Kautschukmischung (221), gemessen nach der Norm ASTM D 5992 - 96 bei einer Temperatur von 0 °C bei 10 Hz, aufweist und die dritte Kautschukmischung (223) einen dynamischen Verlust tanD0_3, gemessen nach der Norm ASTM D 5992 - 96 bei einer Temperatur von 0 °C bei 10 Hz, von höchstens 70 % des dynamischen Verlustes tanD0_1 der ersten Kautschukmischung (221), gemessen nach der Norm ASTM D 5992 - 96 bei einer Temperatur von 0 °C bei 10 Hz, aufweist,
**dadurch, dass** der dynamische Verlust tanD23_1 der ersten Kautschukmischung (221), gemessen nach der Norm ASTM D 5992 - 96 bei einer Temperatur von 23 °C bei 10 Hz, höchstens gleich dem dynamischen Verlust tanD23_2 der zweiten Kautschukmischung (222), gemessen nach der Norm ASTM D 5992 - 96 bei einer Temperatur von 23 °C bei 10 Hz, ist und der dynamische Verlust tanD23_3 der dritten Kautschukmischung (223), gemessen nach der Norm ASTM D 5992 - 96 bei einer Temperatur von 23 °C bei 10 Hz, höchstens 70 % des dynamischen Verlustes tanD23_1 der ersten Kautschukmischung (221), gemessen nach der Norm ASTM D 5992 - 96 bei einer Temperatur von 23 °C bei 10 Hz, beträgt.

2. Reifen (1) nach Anspruch 1, bei dem die ersten und zweiten Kautschukmischungen (221, 222) des Laufstreifens (2) einen Kieselsäurefüllstoff von mindestens 100 Massenanteilen bezogen auf einhundert Teile Elastomer umfassen, bei dem die dynamischen Verluste tanD0_1 und tanD0_2 der ersten und zweiten Kautschukmischungen (221, 222) des Laufstreifens (2), gemessen nach der Norm ASTM D 5992 - 96 bei einer Temperatur von 0 °C bei 10 Hz, mindestens 0,7 betragen, bei dem die dritte Kautschukmischung (223) des Laufstreifens (2) einen Kieselsäurefüllstoff von höchstens 100 Massenanteilen bezogen auf einhundert Teile Elastomer umfasst und bei dem der dynamische Verlust tanD0_3 der dritten Kautschukmischung (223) des Laufstreifens (2), gemessen nach der Norm ASTM D 5992 - 96 bei einer Temperatur von 0 °C bei 10 Hz, mindestens 0,22, bevorzugt mindestens 0,28 beträgt.

3. Reifen (1) nach einem der vorhergehenden Ansprüche, bei dem die zweite Kautschukmischung (222) einen dynamischen Verlust tanD0_2, gemessen nach der Norm ASTM D 5992 - 96 bei einer Temperatur von 0 °C bei 10 Hz, von höchstens gleich dem 1,2-Fachen des dynamischen Verlustes tanD0_1 der ersten Kautschukmischung (221), gemessen nach der Norm ASTM D 5992 - 96, bei einer Temperatur von 0 °C bei 10 Hz, aufweist.

4. Reifen (1) nach einem der vorhergehenden Ansprüche, bei dem der dynamische Verlust tanD23_1 der ersten Kautschukmischung (221), gemessen nach der Norm ASTM D 5992 - 96 bei einer Temperatur von 23 °C bei 10 Hz, höchstens gleich dem 0,8-Fachen des dynamischen Verlustes ein Verlust tanD23_2 der zweiten Kautschukmischung (222), gemessen nach der Norm ASTM D 5992 - 96 bei einer Temperatur von 23 °C bei 10 Hz, ist und der dynamische Verlust tanD23_3 der dritten Kautschukmischung (223), gemessen nach der Norm ASTM D 5992 - 96 bei einer Temperatur von 23 °C bei 10 Hz, höchstens 0,3, bevorzugt höchstens 0,25, bevorzugt höchstens 0,2 beträgt.

5. Reifen (1) nach einem der vorhergehenden Ansprüche, bei dem die zweite Kautschukmischung (222) einen Sekantendehnungsmodul MA300_2 bei 300 % Verformung, gemessen bei 23 °C nach der Norm ASTM D 412-16, von mindestens gleich dem 0,9-Fachen des Sekantendehnungsmoduls MA300_1 bei 300 % Verformung der ersten Kautschukmischung (221) und höchstens gleich dem 1,1-Fachen des Sekantendehnungsmoduls MA300_1 bei 300 % Verformung der ersten Kautschukmischung (221) aufweist.

6. Reifen (1) nach einem der vorhergehenden Ansprüche, bei dem die dritte Kautschukmischung (223) einen Sekantendehnungsmodul MA300_3 bei 300 % Verformung, gemessen bei 23 °C nach der Norm ASTM D 412-16, von mindestens 1,5 MPa, bevorzugt mindestens 1,7 MPa, höchstens 2,4 MPa, bevorzugt höchstens 2,2 MPa aufweist.

7. Reifen (1) nach einem der vorhergehenden Ansprüche, bei dem die zweite Kautschukmischung (222) eine Shore-Härte DS2 von höchstens 10 plus der Shore-Härte DS1 der ersten Kautschukmischung (221) aufweist.

8. Reifen (1) nach einem der vorhergehenden Ansprüche, bei dem die dritte Kautschukmischung (223) eine Shore-Härte DS3 von höchstens gleich der Shore-Härte DS1 der ersten Kautschukmischung (221) minus 3, mindestens gleich der Shore-Härte DS1 der ersten Kautschukmischung (221) minus 7, bevorzugt mindestens 45, mindestens 50 aufweist.

9. Reifen (1) nach einem der vorhergehenden Ansprüche, bei dem die dritte Kautschukmischung (223) des Laufstreifens über einen Teil des Laufstreifens radial innerhalb der ersten Kautschukmischung (221) des Laufstreifens ist.

10. Reifen (1) nach einem der vorhergehenden Ansprüche, bei dem die dritte Kautschukmischung (223) des Laufstreifens mindestens 75 %, bevorzugt mindestens 90 %, des Volumens der axial äußeren Teile des Laufstreifens ausmacht.

11. Reifen (1) nach einem der vorhergehenden Ansprüche, der mindestens eine Verschleißanzeige umfasst und bei dem die erste Kautschukmischung (221) mindestens 90 % des Volumens des zentralen Teils des Laufstreifens radial außerhalb der Punkte radial außerhalb des am weitesten außen liegenden Punkts (12) der Verschleißanzeige (11), der von dem Punkt (11) der Verschleißanzeige um einen radialen Abstand von 2 mm entfernt ist, ausmacht.

12. Reifen (1) nach einem der vorhergehenden Ansprüche, der mindestens eine Verschleißanzeigen umfasst und bei dem die zweite Kautschukmischung (222) mindestens 20 % an Volumen des Abschnitts, des zentralen Teils des Laufstreifens ausmacht, der zwischen der axialen Geraden liegt, die durch den radial am weitesten außen liegenden Punkt der Verschleißanzeige (11) verläuft, und den Punkten (12) radial außerhalb des am weitesten außen liegenden Punkts der Verschleißanzeige (11), und in einem radialen Abstand von 2 mm von diesem radial am weitesten außen liegenden Punkt (11) der Verschleißanzeige gelegen ist.

13. Reifen (1) nach einem der vorhergehenden Ansprüche, der mindestens eine Umfangsrille umfasst und bei dem der Teil des Laufstreifens (2) mit einer radialen Dicke von 0,5 mm in der Lotrechten zur Fläche jeder Umfangsrille aus der ersten Kautschukmischung (221) besteht.

14. Reifen (1) nach einem der vorhergehenden Ansprüche, der mindestens Rillen umfasst und bei dem der radiale Abstand (d) zwischen den radial am weitesten innen liegenden Punkten der Rillen und der Gürtelbewehrung mindestens 1 mm und höchstens 2,5 mm, bevorzugt höchstens 2 mm beträgt.

## Claims

1. Tyre (1) for a passenger vehicle, comprising:
• a tread (2) that is intended to come into contact with the ground via a tread surface (22), two beads that are intended to come into contact with a rim, and two sidewalls that connect the crown to the beads,
• the tread being radially on the outside of a crown reinforcement (3), said crown reinforcement comprising at least one crown layer comprising reinforcing elements,
• the tread having a central part and two axially outer parts, the central part having an axial width equal to 90% of the axial width L of the tread (2),
• the tread comprising at least three rubber compounds, called first, second and third rubber compounds (221, 222, 223),
• the central part of the tread comprising at least the first and second rubber compounds (221, 222), these two rubber compounds making up at least 90% of the volume of the central part of the tread (2),
• in the central part of the tread, the first rubber compound (221) being radially on the outside of the second rubber compound (222) and the first rubber compound (221) making up at least 40% and at most 60% of the volume of the central part of the tread (2),
• the first and third rubber compounds (221, 223) making up at least 90% of the volume of the axially outer parts of the tread, the third rubber compound being axially on the outside of the first rubber compound (221) and making up at least 40% of the volume of the axially outer parts,
**characterized in that** the second rubber compound (222) has a Shore hardness DS2 at least equal to 5 plus the Shore hardness DS1 of the first rubber compound (221), the Shore hardness DS3 of the third rubber compound (223) being at most equal to the Shore hardness DS1 of the first rubber compound (221), each Shore hardness DS1, DS2, DS3 being measured at 23°C according to standard ASTM 2240-15e1,
**in that** the second rubber compound (222) has a secant tensile modulus MA300_2 at 300% deformation, measured at 23°C according to standard ASTM D 412-16, at least equal to 0.75 times the secant tensile modulus MA300_1 at 300% deformation of the first rubber compound (221) and at most equal to 1.25 times the secant tensile modulus MA300_1 at 300% deformation of the first rubber compound (221), and the third rubber compound (223) has a secant tensile modulus MA300_3 at 300% deformation, measured at 23°C according to standard ASTM D 412-16, at least equal to 0.9 times the secant tensile modulus MA300_1 at 300% deformation of the first rubber compound (221) and at most equal to 1.3 times the secant tensile modulus MA300_1 at 300% deformation of the first rubber compound (221),
**in that** the second rubber compound (222) has a dynamic loss tanD0_2, measured according to standard ASTM D 5992 - 96, at a temperature of 0°C at 10 Hz, at least equal to the dynamic loss tanD0_1 of the first rubber compound (221), measured according to standard ASTM D 5992 - 96, at a temperature of 0°C at 10 Hz, and the third rubber compound (223) has a dynamic loss tanD0_3, measured according to standard ASTM D 5992 - 96, at a temperature of 0°C at 10 Hz, at most equal to 70% of the dynamic loss tanD0_1 of the first rubber compound (221), measured according to standard ASTM D 5992 - 96, at a temperature of 0°C at 10 Hz,
**in that** the dynamic loss tanD23_1 of the first rubber compound (221), measured according to standard ASTM D 5992 - 96, at a temperature of 23°C at 10 Hz, is at most equal to the dynamic loss tanD23_2 of the second rubber compound (222), measured according to standard ASTM D 5992 - 96, at a temperature of 23°C at 10 Hz and the dynamic loss tanD23_3 of the third rubber compound (223), measured according to standard ASTM D 5992 - 96, at a temperature of 23°C at 10 Hz, is at most equal to 70% of the dynamic loss tanD23_1 of the first rubber compound (221), measured according to standard ASTM D 5992 - 96, at a temperature of 23°C at 10 Hz.

2. Tyre (1) according to Claim 1, in which said first and second rubber compounds (221, 222) of the tread (2) comprise a silica filler at least equal by weight to 100 parts per hundred of elastomer, in which the dynamic losses tanD0_1 and tanD0_2 of the first and second rubber compounds (221, 222) of the tread (2), measured according to standard ASTM D 5992 - 96, at a temperature of 0°C at 10 Hz, are at least equal to 0.7, in which the third rubber compound (223) of the tread (2) comprises a silica filler at most equal by weight to 100 parts per hundred of elastomer and in which the dynamic loss tanD0_3 of the third rubber compound (223) of the tread (2), measured according to standard ASTM D 5992-96, at a temperature of 0°C at 10 Hz, is at least equal to 0.22, preferentially at least equal at 0.28.

3. Tyre (1) according to any one of the preceding claims, in which the second rubber compound (222) has a dynamic loss tanD0_2, measured according to standard ASTM D 5992 - 96, at a temperature of 0°C at 10 Hz, at most equal to 1.2 times the dynamic loss tanD0_1 of the first rubber compound (221), measured according to standard ASTM D 5992 - 96, at a temperature of 0°C at 10 Hz.

4. Tyre (1) according to any one of the preceding claims, in which the dynamic loss tanD23_1 of the first rubber compound (221), measured according to standard ASTM D 5992 - 96, at a temperature of 23°C at 10 Hz, is at most equal to 0.8 times the dynamic loss tanD23_2 of the second rubber compound (222), measured according to standard ASTM D 5992 - 96, at a temperature of 23°C at 10 Hz and the dynamic loss tanD23_3 of the third rubber compound (223), measured according to standard ASTM D 5992 - 96, at a temperature of 23°C at 10 Hz, is at most equal to 0.3, preferentially at most equal to 0.25, preferentially at most equal to 0.2.

5. Tyre (1) according to any one of the preceding claims, in which the second rubber compound (222) has a secant tensile modulus MA300_2 at 300% deformation, measured at 23°C according to standard ASTM D 412-16, at least equal to 0.9 times the secant tensile modulus MA300_1 at 300% deformation of the first rubber compound (221) and at most equal to 1.1 times the secant tensile modulus MA300_1 at 300% deformation of the first rubber compound (221).

6. Tyre (1) according to any one of the preceding claims, in which the third rubber compound (223) has a secant tensile modulus MA300_3 at 300% deformation, measured at 23°C according to standard ASTM D 412-16, at least equal to 1.5 MPa, preferentially at least equal to 1.7 MPa, at most equal to 2.4 MPa, preferentially at most equal to 2.2 MPa.

7. Tyre (1) according to any one of the preceding claims, in which the second rubber compound (222) has a Shore hardness DS2 at most equal to 10 plus the Shore hardness DS1 of the first rubber compound (221).

8. Tyre (1) according to any one of the preceding claims, in which the third rubber compound (223) has a Shore hardness DS3 at most equal to the Shore hardness DS1 of the first rubber compound (221) minus 3, at least equal to the Shore hardness DS1 of the first rubber compound (221) minus 7, preferentially at least equal to 45, at least equal to 50.

9. Tyre (1) according to any one of the preceding claims, in which the third rubber compound (223) of the tread is radially on the inside of the first rubber compound (221) of the tread over a part of the tread.

10. Tyre (1) according to any one of the preceding claims, in which the third rubber compound (223) of the tread represents at least 75%, preferentially at least 90% of the volume of the axially outer parts of the tread.

11. Tyre (1) according to any one of the preceding claims, comprising at least one wear indicator and in which the first rubber compound (221) constitutes at least 90% of the volume of the central part of the tread radially on the outside of the points radially on the outside of the radially outermost point (12) of the wear indicator (11), spaced apart from said point (11) of the wear indicator by a radial distance equal to 2 mm.

12. Tyre (1) according to any one of the preceding claims, comprising at least one wear indicator and in which the second rubber compound (222) makes up at least 20% by volume of the portion of the central part of the tread, between the axial straight line passing through the radially outermost point of the wear indicator (11) and the points (12) that are radially on the outside of the radially outermost point of the wear indicator (11) and situated at a radial distance equal to 2 mm from said radially outermost point (11) of the wear indicator.

13. Tyre (1) according to any one of the preceding claims, comprising at least one circumferential furrow and in which the part of the tread (2), having a radial thickness of 0.5 mm, which is vertically in line with the surface of each circumferential furrow is constituted by the first rubber compound (221).

14. Tyre (1) according to any one of the preceding claims, comprising at least grooves and in which the radial distance (d) between the radially innermost points of the grooves and the crown reinforcement is at least equal to 1 mm and at most equal at 2.5 mm, preferentially at most equal to 2 mm.
